# EUROPÄISCHE PATENTSCHRIFT

(11) **EP 3 566 031 B1**
(45) Veröffentlichungstag und Bekanntmachung des Hinweises auf die Patenterteilung: **07.04.2021**
(21) Anmeldenummer: 17791398.5
(22) Anmeldetag: 30.10.2017
(51) Int. Cl.: G01K 1/16, G01K 13/02, G01K 15/00

(54) **THERMOMETER**
THERMOMETER
THERMOMÈTRE

(30) Priorität: 09.01.2017 DE 102017100267
(43) Veröffentlichungstag der Anmeldung: 13.11.2019
(73) Patentinhaber: Endress+Hauser Wetzer GmbH+Co. KG, 87484 Nesselwang (DE)
(72) Erfinder: UMKEHRER, Alfred, 87659 Hopferau (DE)
(74) Vertreter: Andres, Angelika Maria
(86) Internationale Anmeldenummer: PCT/EP2017/077746
(87) Internationale Veröffentlichungsnummer: WO 2018/127312

(56) Entgegenhaltungen:
- DE-A1-102010 040 039
- US-A1- 2007 259 211
- US-A1- 2009 296 773
- Anonymous: "Wärmeleitfähigkeit von hexagonalem Bornitrid", , 21. Juni 2016 (2016-06-21), XP055439437, Gefunden im Internet: URL:https://web.archive.org/web/2016062105 5117/https://www.henze-bnp.de/Bornitrid-Le xikon/Waermeleitfaehigkeit.html [gefunden am 2018-01-10]

## Beschreibung

Die Erfindung bezieht sich auf eine Vorrichtung zur Bestimmung und/oder Überwachung der Temperatur eines Mediums und ein Verfahren zur Herstellung einer erfindungsgemäßen Vorrichtung. Die Vorrichtung umfasst zumindest einen Temperatursensor und zumindest ein Messelement, wobei der Temperatursensor und das Messelement in einem einzigen Sensorkopf untergebracht sind. Bei dem Messelement handelt es sich bevorzugt um ein weiteres Sensorelement, beispielsweise um einen weiteren Temperatursensor, um eine Fixpunktzelle, oder um ein Referenzelement.

Aus der DE4318486A1 ist beispielsweise ein Temperatursensor mit zwei auf eine Temperatur ansprechenden Messelementen bekannt geworden, welche beide am Boden eines rohrförmigen Fühlergehäuses angeordnet sind.

Aus der US 2009/296773 A1 ist ein Doppeltemperatursensor bekannt, der zwei in einem Gehäuse angeordnete Temperatursensoren sowie ein Material mit anisotroper Wärmeleitfähigkeit umfasst, das den Wärmefluss innerhalb des Gehäuses gezielt beeinflusst.

Zum Zweck der Kalibrierung eines Thermometers im eingebauten Zustand ist aus der DE19941731A1 eine miniaturisierte und in ein Thermometer integrierte, mit einer Fixpunktsubstanz, z. B. einem Metall oder einer eutektischen Legierung, gefüllten Fixpunktzelle bekannt geworden. Ebenfalls zum Zwecke der Kalibrierung und/oder Validierung eines Thermometers ist ferner aus der EP1247268B2 beispielsweise ein Verfahren zur in situ Kalibrierung mehrerer integrierter Temperatursensoren anhand von Kennlinien eines oder mehrerer Referenzelemente in Form von sekundären Temperatursensoren beschrieben, welche Referenzelemente in einen Thermometereinsatz zusätzlich zu einem primären Temperatursensor eingebaut sind.

Weiterhin sind aus der DE102010040039A1 eine Vorrichtung und ein Verfahren zur in situ Kalibrierung eines Thermometers mit einem Temperatursensor und einem Referenzelement zur Kalibrierung des Temperatursensors bekannt geworden, bei welcher das Referenzelement wenigstens teilweise aus einem ferroelektrischen Material besteht, welches im zur Kalibrierung des Temperatursensors relevanten Temperaturbereich eine Phasenumwandlung bei zumindest einer vorgegebenen Temperatur erfährt. Die Kalibrierung wird also anhand des charakteristischen Temperaturpunkts eines Phasenübergangs eines ferroelektrischen Materials, also anhand einer materialspezifischen Eigenschaft vorgenommen. Eine ähnliche Vorrichtung ist Gegenstand der bisher unveröffentlichten deutschen Patentanmeldung mit dem Aktenzeichen 102015112425.4. Das dort beschriebene Thermometer umfasst zumindest einen Temperatursensor und zumindest zwei über genau zwei Anschlussdrähte kontaktierte Referenzelemente, welche zumindest teilweise aus zwei unterschiedlichen Materialien bestehen, für welche Materialien jeweils im zur Kalibrierung des Temperatursensors relevanten Temperaturbereich zumindest ein Phasenübergang zumindest zweiter Ordnung bei jeweils einer vorgegebenen Phasenübergangstemperatur auftritt. Auf die DE102010040039A1 sowie auf die Patentanmeldung mit dem Aktenzeichen 102015112425.4 wird im Folgenden vollumfänglich Bezug genommen.

Im Falle, dass ein Thermometer mit einem Temperatursensor und einem weiteren im gleichen Sensorkopf angeordneten Messelement für ein Medium mit einem zumindest zeitweise inhomogenen Temperaturprofil eingesetzt wird, beispielsweise für ein strömendes Medium, kann es dazu kommen, dass der Temperatursensor und das weitere Messelement, welche jeweils an unterschiedlichen Positionen innerhalb des Sensorkopfes angeordnet sind, zumindest zeitweise unterschiedlichen Temperaturen ausgesetzt sind. Der Temperatursensor und das Messelement sind dann zumindest zeitweise nicht im thermischen Gleichgewicht, was nachteilig zu Fehlern und Messungenauigkeiten führen kann.

Der vorliegenden Erfindung liegt die Aufgabe zugrunde, eine Vorrichtung zur Bestimmung und/oder Überwachung der Temperatur eines Mediums mit einer hohen Messgenauigkeit, sowie ein Verfahren zu deren Herstellung, bereitzustellen.

Diese Aufgabe wird gelöst durch eine Vorrichtung nach Anspruch 1 und durch ein Verfahren nach Anspruch 13.

Die erfindungsgemäße Vorrichtung dient der Bestimmung und/oder Überwachung der Temperatur eines Mediums und umfasst zumindest einen Temperatursensor und ein Messelement, wobei zumindest der Temperatursensor und das Messelement in einem einzigen Sensorkopf angeordnet sind. Ferner ist zumindest teilweise innerhalb des Sensorkopfes eine Einheit angeordnet, welche ein Material mit anisotroper Wärmeleitfähigkeit umfasst.

Zur Bestimmung und/oder Überwachung der Temperatur des jeweiligen Mediums wird der Sensorkopf mit dem Medium in, insbesondere in thermischen, Kontakt gebracht. Es findet ein Wärmaustausch zwischen der Vorrichtung und dem Medium statt, bis sich ein thermisches Gleichgewicht einstellt. Dann weisen der Sensorkopf und das Medium im Wesentlichen die gleiche Temperatur, im Folgenden als Gleichgewichtstemperatur bezeichnet, auf. Für den Sensorkopf findet eine Wärmeausbreitung von dessen dem Medium zugewandten Oberfläche ausgehend ins Innere des Sensorkopfes statt. Unter Wärmeausbreitung wird in diesem Zusammenhang sowohl ein Wärmefluss vom Medium zum Sensorkopf, entsprechend dem Falle, dass das Medium eine höhere Temperatur aufweist als der Sensorkopf, als auch in umgekehrter Richtung, im Falle, dass der Sensorkopf eine höhere Temperatur aufweist, verstanden. Im thermischen Gleichgewicht weisen auch der Temperatursensor und das Messelement im Wesentlichen dieselbe Temperatur auf.

Es können nun bei herkömmlichen Thermometern mit zumindest zwei in einem einzigen Sensorkopf angeordneten Messelementen, wovon zumindest ein Messelement ein Temperatursensor ist, verschiedene Fälle auftreten, in denen der Zustand thermischen Gleichgewichts nicht zu jedem Zeitpunkt gegeben ist. Der Temperatursensor und das Messelement sind also zu bestimmten Zeitpunkten, welcher jeweils vor Zeitpunkten liegen, zu welchem sich die Gleichgewichtstemperatur einstellt, unterschiedlichen Temperaturen ausgesetzt. Dies kann einerseits durch eine, insbesondere konstruktiv bedingte, asymmetrische Anordnung des Temperatursensors und des Messelements innerhalb des Sensorkopfes bedingt sein. Beispielsweise können der Temperatursensor und das Messelement in unterschiedlichen Abständen zur äußeren Bewandung des Sensorkopfes angeordnet sein. Ein anderer Fall liegt vor, wenn die Vorrichtung einem zumindest zeitweisen und/oder teilweisen dynamischen und /oder inhomogenen thermischen Umfeld ausgesetzt ist, beispielsweise für eine Anwendung in einem strömenden Medium. Dann ist bei einer Änderung der Temperatur des Mediums von einer ersten Temperatur zu einer zweiten Temperatur der der Strömungsrichtung zugewandte Bereich des Sensorkopfes zu einem früheren Zeitpunkt der zweiten Temperatur ausgesetzt als der der Strömungsrichtung des Mediums abgewandte Bereich des Sensorkopfes. Wieder ist die Folge, dass der Temperatursensor und das Messelement zu einem bestimmten Zeitpunkt, welcher vor dem Zeitpunkt liegt, zu welchem sich die Gleichgewichtstemperatur einstellt, unterschiedlichen Temperaturen ausgesetzt sind. Es versteht sich von selbst, dass eine Vielzahl weiterer Fälle zu einem zumindest zeitweise auftretenden Temperaturunterschied zwischen der Temperatur des Temperatursensors und der Temperatur des Messelements führen können. Wenn beispielsweise die mittels des Temperatursensors gemessene Temperatur und die mittels des Messelements ermittelte, insbesondere physikalische oder chemische, insbesondere von der Temperatur abhängige, Größe, beispielsweise ebenfalls eine Temperatur, miteinander in eine, insbesondere mathematische, Beziehung gesetzt werden, um beispielsweise einen Temperaturmesswert zu ermitteln oder eine Kalibrierung/Validierung durchzuführen, können Fehler und/oder Messungenauigkeiten die Folge sein.

Um die beschriebene Problematik zu vermeiden, ist die erfindungsgemäße Einheit, welche zumindest teilweise ein Material mit anisotroper Wärmeleitfähigkeit umfasst, vorgesehen. Die Wärmeleitfähigkeit der Einheit ist richtungsabhängig. Somit lässt sich der Wärmestrom innerhalb des Sensorkopfes durch eine, ggf. für eine bestimmte Anwendung speziell konzipierte Ausgestaltung der Einheit, vorteilhaft gezielt beeinflussen.

Erfindungsgemäß ist die Einheit dazu ausgestaltet, zu gewährleisten, dass zumindest der Temperatursensor und das Messelement zu jedem Zeitpunkt im Wesentlichen im thermischen Gleichgewicht sind. Die Einheit sorgt also dafür, dass, unabhängig vom thermischen Umfeld der Vorrichtung, eine homogene Wärmeausbreitung innerhalb des Sensorkopfes stattfindet. Die Einheit ist insbesondere bevorzugt derart ausgestaltet, dass im Falle einer Änderung der Temperatur des Mediums im Bereich des Temperatursensors und im Bereich des Messelements zu jedem Zeitpunkt im Wesentlichen die gleiche Temperatur vorherrscht.

Handelt es sich bei dem Messelement beispielsweise um einen weiteren Temperatursensor, so ist gewährleistet, dass keine Messwertabweichungen der mittels der beiden Temperatursensoren bestimmten Temperaturen, beispielsweise in Folge einer asymmetrischen Anordnungen innerhalb des Sensorkopfes, oder beim Einsatz in strömenden Medien, auftreten. Ähnlich gewährleistet die Einheit im Falle, dass das Messelement eine Fixpunktzelle oder ein Referenzelement zur Kalibrierung und/oder Validierung des Temperatursensors, dass eine mittels des Referenzelements bestimmte Temperatur direkt mit der zum im Wesentlichen gleichen Zeitpunkt gemessenen Temperatur des Temperatursensors verglichen werden kann.

Gemäß einer Ausgestaltung der erfindungsgemäßen Vorrichtung handelt es sich bei dem Messelement um einen zweiten Temperatursensor. Der erste und zweite Temperatursensor dienen beispielsweise der Herstellung einer Redundanz bei der Bestimmung und/oder Überwachung der Temperatur des Mediums.

Gemäß einer alternativen Ausgestaltung der erfindungsgemäßen Vorrichtung handelt es sich bei dem Messelement um ein Referenzelement zur in situ Kalibrierung und/oder Validierung zumindest des Temperatursensors, wobei das Referenzelement zumindest teilweise aus zumindest einem Material besteht, für welches Material im zur Kalibrierung des ersten Temperatursensors relevanten Temperaturbereich zumindest ein Phasenübergang bei zumindest einer vorgegebenen Phasenübergangstemperatur auftritt bei welchem Phasenübergang das Material in der festen Phase verbleibt,.

Mit Hinblick auf die Ausgestaltung mit zumindest einem Referenzelement sei auf die DE102010040039A1 sowie auf die deutsche Patentanmeldung mit dem Aktenzeichen 102015112425.4 verwiesen, welche beide derartige Referenzelemente zum Gegenstand haben. Dabei wird ein Temperatursensor (Primärsensor) mit Hilfe von zumindest einem ebenfalls im Thermometereinsatz, bzw. Sensorkopf, befindlichen Sekundärsensor (Referenzelement) kalibriert und/oder validiert. Sind zumindest zwei Referenzelemente vorgesehen, ist neben einer sogenannten Einpunkt-Kalibrierung und/oder Validierung auch eine sogenannte Mehrpunkt-Kalibrierung und/oder Validierung möglich.

Bei einem Phasenübergang in einem Material, welches Material in der festen Phase verbleibt, handelt es sich beispielsweise nach der Ehrenfestklassifikation um einen Phasenübergang zumindest zweiter Ordnung. Im Unterschied zu einem Phasenübergang erster Ordnung wird keine oder nur eine vernachlässigbare Menge latenter Wärme während des Phasenübergangs frei. Wenn keine oder nur eine vernachlässigbare Menge an latenter Wärme frei wird, kann - grundsätzlich und unabhängig von der gewählten Klassifikation für Phasenübergänge - unter anderem vorteilhaft gewährleistet werden, dass die mittels des Temperatursensors gemessene Temperatur zum Zeitpunkt des Auftretens eines Phasenübergangs, nicht, insbesondere nicht durch frei werdende latente Wärme, verfälscht wird.

In einer weiteren, heute deutlich gebräuchlicheren Klassifizierung von Phasenübergängen wird lediglich zwischen diskontinuierlichen (1. Ordnung) und kontinuierlichen (2. Ordnung) Phasenübergängen unterschieden [s. z. B. Lexikon der Physik, Spektrum Akademischer Verlag Heidelberg Berlin, Band 4 unter dem Stichwort "Phasenübergänge und andere kritische Phänomene]. Nach dieser Klassifikation wiederum lassen sich beispielsweise verschiedenen ferroelektrischen Materialien sowohl Phasenübergänge 1. als auch 2. Ordnung zuordnen, wobei in beiden Fällen das jeweilige Material, für das ein Phasenübergang stattfindet, während des Phasenübergangs in der festen Phase verbleibt.

Ein Phasenübergang beinhaltet eine Unstetigkeit in der zweiten Ableitung einer thermodynamischen Größe wie beispielsweise dem Druck, dem Volumen, der Enthalpie, oder der Entropie als Funktion beispielsweise der Temperatur. Üblicherweise gehen Phasenübergänge mit der Änderung einer bestimmten spezifischen Materialeigenschaft einher, beispielsweise mit einem Wechsel der Kristallstruktur, oder einem Wechsel in den magnetischen, elektrischen oder dielektrischen Eigenschaften. Diese materialspezifischen Änderungen sind für das jeweilige Referenzelement bekannt und können für eine Kalibrierung und/oder Validierung eines Temperatursensors herangezogen werden. Dabei kann das zumindest eine Referenzelement einen oder mehrere Phasenübergänge, insbesondere Phasenübergänge in der festen Phase des jeweils verwendeten Materials, aufweisen. Jeder Phasenübergang findet bei einem bestimmten charakteristischen fixen und langzeitstabilen Temperaturwert statt, so dass für das Referenzelement im Prinzip keine Drift und/oder keine Alterungseffekte berücksichtigt werden müssen.

Es ist somit von Vorteil, wenn es sich bei dem Material um ein ferroelektrisches Material, um ein ferromagnetisches Material, oder um einen Supraleiter, insbesondere um einen Hochtemperatursupraleiter, handelt. Die bei diesen Materialien auftretenden Phasenübergänge betreffen Phasenübergänge von der paraelektrischen Phase in die ferroelektrische Phase und umgekehrt, von der paramagnetischen Phase in die ferromagnetische Phase und umgekehrt sowie Phasenübergänge vom normalleitenden Zustand in den supraleitenden Zustand und umgekehrt.

Ein ferroelektrisches Material, auch Ferroelektrikum genannt, ist ein Material, welches unterhalb einer sogenannten materialspezifischen ferroelektrischen Curie-Temperatur auch ohne dass ein elektrisches Feld angelegt ist, eine elektrische Polarisation aufweisen kann. Dieses Phänomen ist entsprechend nur im Falle von Kristallstrukturen zu beobachten, bei welchen die Ausbildung einer polaren Achse möglich ist. Bei Überschreiten der ferroelektrischen Curie-Temperatur findet ein Phasenübergang vom ferroelektrischen in den paraelektrischen Zustand, oder umgekehrt, statt, welcher mit dem Verschwinden oder der Ausbildung einer Polarisierung des jeweiligen Materials einhergeht. Bei einem solchen Phasenübergang kann dann beispielsweise ein markanter Verlauf der Dielektrizitätskonstanten als Funktion der Temperatur beobachtet werden, welcher für die Kalibrierung und/oder Validierung des Temperatursensors herangezogen werden kann. Ähnlich verhält es sich bei Verwendung eines ferromagnetischen Materials. Bei der sogenannten Curie-Temperatur findet ein Phasenübergang vom ferromagnetischen in den paramagnetischen Zustand, oder umgekehrt statt, wobei eine Magnetisierung des jeweiligen Materials jeweils oberhalb der Curie-Temperatur verschwindet.

Die Einheit umgibt bevorzugt zumindest teilweise zumindest den Temperatursensor und/oder das Messelement.

In einer weiteren bevorzugten Ausgestaltung der erfindungsgemäßen Vorrichtung umfasst die Einheit eine Schicht oder eine Beschichtung, welche Schicht oder Beschichtung zumindest teilweise aus dem Material mit anisotroper Wärmeleitfähigkeit besteht. Die Schicht weist bevorzugt in Längsrichtung, also entlang einer Ebene parallel zu der Schicht oder Beschichtung, eine größere Wärmeleitfähigkeit auf, als senkrecht dazu, bzw. senkrecht zu der Ebene. Hierdurch wird der Wärmestrom innerhalb des Sensorkopfes gezielt entlang der Einheit umverteilt.

In einer besonders bevorzugten Ausgestaltung umfasst die Einheit eine dünnwandige Folie, welche Folie zumindest teilweise aus dem Material mit anisotroper Wärmeleitfähigkeit besteht. Die Folie weist ebenfalls bevorzugt entlang ihrer Längsachse eine höhere Wärmeleitfähigkeit auf, als senkrecht dazu.

Gemäß einer weiteren Ausgestaltung der erfindungsgemäßen Vorrichtung ist ein Füllstoff vorgesehen, welcher zumindest teilweise innerhalb des Sensorkopfes angeordnet ist, und einen Innenraum des Sensorkopfes zumindest teilweise, vorzugsweise vollständig, ausfüllt. Die Einheit, welche ebenfalls zumindest teilweise innerhalb des Sensorkopfes angeordnet ist, ist bevorzugt ebenfalls zumindest teilweise von dem Füllstoff umgeben. Bei dem Füllstoff handelt es sich beispielsweise um einen Zement, insbesondere um eine Mischung aus Magnesiumoxid, Zirkonsilikat und Magnesiumphosphat

Hierbei ist es von Vorteil, wenn der Füllstoff eine im Wesentlichen homogene thermische Leitfähigkeit und/oder thermische Kapazität aufweist. Der Füllstoff gewährleistet also eine im Wesentlichen homogene Wärmeausbreitung, insbesondere isotrope, Wärmeausbreitung innerhalb des Sensorkopfes.

Gemäß einer besonders bevorzugten Ausgestaltung handelt es sich bei dem Material mit anisotroper Wärmeleitfähigkeit um ein zumindest teilweise Kohlenstoff enthaltendes Material, insbesondere Graphit, oder um hexagonales Bornitrid.
Eine weitere, besonders bevorzugte Ausgestaltung sieht vor, dass die Einheit derart ausgestaltet und/oder angeordnet ist, dass sie parallel zur Umfangsrichtung des Sensorkopfes eine höhere, insbesondere zumindest 10fach größere, insbesondere zumindest 30fach höhere, Wärmeleitfähigkeit aufweist als senkrecht zur Umfangsrichtung. Diese Ausgestaltung ist insbesondere vorteilhaft für den Einsatz in einem zumindest zeitweise und/oder teilweise dynamischen und/oder inhomogenen thermischen Umfeld geeignet, beispielsweise für Anwendungen in strömenden Medien.

Es ist von Vorteil, wenn die Einheit derart ausgestaltet und/oder angeordnet ist, dass sie den Temperatursensor und das Messelement zumindest teilweise umgibt. Die Einheit sorgt also für eine Wärmeverteilung in Umfangsrichtung des Sensorkopfes.

Eine Ausgestaltung der Erfindung beinhaltet, dass die Einheit zumindest teilweise an einem dem Inneren des Sensorkopfes zugewandten Teilbereich einer Bewandung des Sensorkopfes befestigt ist. Die Einheit ist also im Bereich der dem Medium zugewandten Oberfläche des Sensorkopfes angeordnet. Die Einheit sorgt für eine Umfangsverteilung eines Wärmestroms entlang der Oberfläche des Sensorkopfes. Von der Oberfläche des Sensorkopfes ausgehend findet dann, im Falle einer entsprechenden Ausgestaltung des Sensorkopfes, vorteilhaft eine im Wesentlichen homogene Wärmeausbreitung ins Innere des Sensorkopfes statt.

Für diese Ausgestaltung ist es von Vorteil, wenn die Einheit mittels zumindest eines Teils des Füllstoffes, und/oder mittels eines Befestigungselements, beispielsweise in Form eines rohrförmigen Elements, an der Bewandung des Sensorkopfes befestigt ist. Bei dem rohrförmigen Element handelt es sich insbesondere um ein Keramikrohr, welches Keramikrohr einen Außendurchmesser aufweist, welcher im Wesentlichen einem Innendurchmesser des Sensorkopfes entspricht, bzw. geringfügig kleiner ist als der Innendurchmesser des Sensorkopfes derart, dass das rohrförmige Element im Wesentlichen passgenau innerhalb des Sensorkopfes angeordnet werden kann.

Die erfindungsgemäße Aufgabe wird ferner gelöst durch ein Verfahren zur Herstellung einer erfindungsgemäßen Vorrichtung, wobei zumindest ein Temperatursensor und ein Messelement in einem einzigen Sensorkopf angeordnet werden. Erfindungsgemäß wird zumindest teilweise innerhalb des Sensorkopfes zumindest eine Einheit umfassend zumindest teilweise ein Material mit anisotroper Wärmeleitfähigkeit angeordnet, wobei die Einheit dazu ausgestaltet ist, den Wärmestrom innerhalb des Sensorkopfes gezielt zu beeinflussen, und zu gewährleisten, dass zumindest der Temperatursensor und das Messelement zu jedem Zeitpunkt im Wesentlichen im thermischen Gleichgewicht sind, und dass unabhängig vom thermischen Umfeld der Vorrichtung, eine homogene Wärmeausbreitung innerhalb des Sensorkopfes stattfindet.

In einer Ausgestaltung des Verfahrens wird die Einheit zumindest teilweise im Bereich einer dem Medium zugewandten Bewandung des Sensorkopfes befestigt. Hierbei ist es von Vorteil, wenn die Einheit mittels zumindest eines Teils des Füllstoffes, und/oder mittels eines Befestigungselements, beispielsweise in Form eines rohrförmigen Elements, an der Bewandung des Sensorkopfes befestigt wird.

Die in Zusammenhang mit der Vorrichtung erläuterten Ausgestaltungen lassen sich mutatis mutandis auch auf das vorgeschlagene Verfahren anwenden.

Die Erfindung wird anhand der nachfolgenden Zeichnungen näher erläutert. Es zeigt:
Fig. 1: eine schematische Darstellung eines Thermometers mit zwei innerhalb eines Sensorkopfes angeordneten Messelementen gemäß Stand der Technik,
Fig. 2:verschiedene mögliche Anordnungen der zwei Messelemente innerhalb des Temperatursensors, und
Fig. 3: bevorzugte Ausgestaltungen eines erfindungsgemäßen Sensorkopfes.

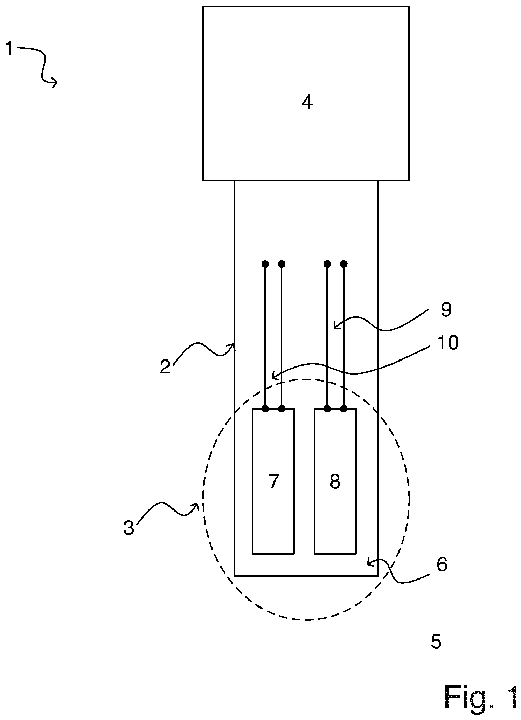

In Fig.1 ist eine schematische Abbildung einer möglichen Ausgestaltung eines Thermometers 1 mit einem Schutzrohr 2 und einer Elektronikeinheit 3 gemäß Stand der Technik gezeigt. Der dem jeweiligen Medium 5 zugewandte Teilbereich des Schutzrohres 2 wird auch als Sensorkopf 3 bezeichnet. Das Innenvolumen des Sensorkopfes 3 ist mit einem, insbesondere elektrisch isolierenden, Füllstoff 6, insbesondere einem Zement, gefüllt. Ferner sind im Inneren des Sensorkopfes 3 ein Temperatursensor 7 und ein Messelement 8 angeordnet, welche jeweils mittels zwei Anschlussdrähten, 9,10 elektrisch kontaktiert und mit der Elektronikeinheit 4 verbunden sind. Bei dem Temperatursensor 7 handelt es sich beispielsweise um ein Widerstandselement oder um ein Thermoelement. Bei dem Messelement 8 wiederum handelt es sich beispielsweise um einen weiteren Temperatursensor, um eine Fixpunktzelle, oder um ein Referenzelement. Aber auch andere Sensoren kommen für das Messelement 8 in Frage.

Die Anzahl der notwendigen Anschlussdrähte 9,10 zur Kontaktierung des jeweiligen Messelements 7,8 kann je nach Art des Messelements 7,8 und je nach angewendetem Messprinzip variieren.

Zum Zwecke einer hohen Messgenauigkeit gilt es zu gewährleisten, dass die beiden Messelemente 7,8, wovon eines ein Temperatursensor 7 ist, im Idealfall zu jedem Zeitpunkt im thermischen Gleichgewicht befinden. Um dies zu erreichen, werden üblicherweise verschiedene Maßnahmen durchgeführt, von denen einige im Folgenden beispielhaft aufgelistet sind:
1. Die zumindest zwei Messelemente 7,8 sind innerhalb des Sensorkopfes 3 symmetrisch, insbesondere symmetrisch zu einer gedachten in Längsrichtung des Schutzrohres 2 durch einen Mittelpunkt des Schutzrohres 2 verlaufenden Achse, angeordnet.
2. Die zumindest zwei Messelemente 7,8 sind möglichst gut thermisch gekoppelt (z.B. verlötet).
3. Im Falle, dass es sich bei beiden Messelementen 7,8 um Temperatursensoren handelt, welche auf einem Trägersubstrat [nicht eingezeichnet] angeordnet sind, weisen die beiden Trägersubstrate dieselbe thermische Leitfähigkeit auf.
4. Die Messelemente 7,8 sind derart ausgestaltet, dass sie dieselbe thermische Kapazität aufweisen.
5. Ein die Messelemente umgebender Füllstoff 6 oder im Bereich des Sensorkopfes 3 angeordnete Trennwände [nicht eingezeichnet] sind derart beschaffen, dass sie eine isotrope und/oder homogene Wärmeausbreitung innerhalb des Sensorkopfes 3 gewährleisten.
6. Alle Komponenten zumindest des Sensorkopfes 3 sind derart ausgestaltet, dass sie eine möglichst hohe thermische Leitfähigkeit aufweisen, damit insbesondere Einflüsse eines inhomogenen thermischen Umfeldes in Umgebung des Sensorkopfes (beispielsweise eine einseitige Strömung eines Mediums 5) nur für möglichst begrenzte Zeiträume zu einem thermischen Ungleichgewicht der beiden Messelemente 7,8 führen. Nachteilig sind die Messelemente 7,8 im Falle, dass die diese umgebenden Komponenten eine hohe thermische Leitfähigkeit aufweisen, den Temperaturschwankungen des inhomogenen thermischen Umfelds allerdings auch vollständig ausgesetzt.

Selbst bei größter Sorgfalt in Bezug auf die Herstellung eines Thermometers 1 mit zumindest zwei in einem einzigen Sensorkopf 3 angeordneten Messelementen 7,8 können jedoch verschiedene Fälle auftreten, in welchen der Temperatursensor 7 und das Messelement 8 zumindest zeitweise nicht im thermischen Gleichgewicht sind und entsprechend unterschiedlichen Temperaturen ausgesetzt sind. Unabhängig davon, ob es sich bei dem Messelement 8 um einen weiteren Temperatursensor, ein Referenzelement, eine Fixpunktzelle, oder eine andere Gattung eines Sensor, mittels welchem eine, insbesondere physikalische oder chemische, insbesondere von der Temperatur abhängige, Größe, ermittelt und/oder überwacht wird, kann dies zu erheblichen Fehlern und/oder Messungenauigkeiten führen.

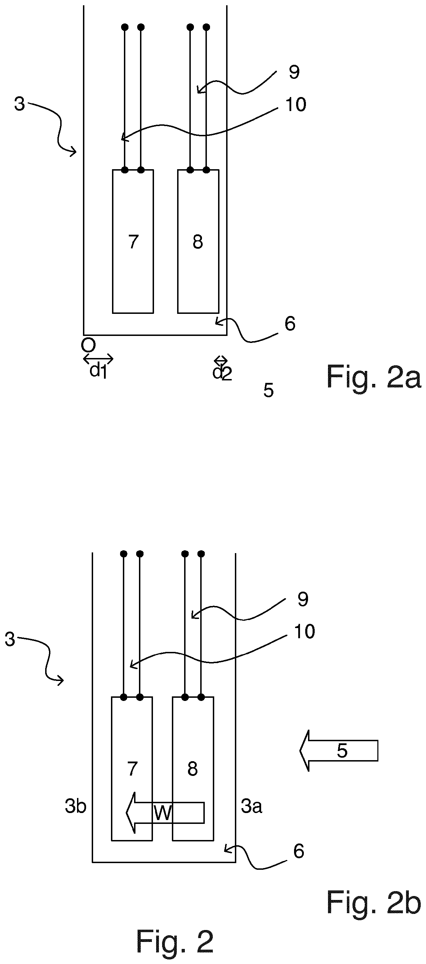

Beispielhaft sind in Fig. 2 zwei Fälle illustriert, für welche der Temperatursensor und das Messelement nicht zu jedem Zeitpunkt im thermischen Gleichgewicht sind.

Konstruktiv bedingt, kann es beispielsweise zu einer asymmetrischen Anordnung des Temperatursensors 7 und des Messelements 8 kommen. Wie in Fig. 2a gezeigt, können beispielsweise der Temperatursensor 7 und das Messelement 8 in unterschiedlichen Abständen d₁ bzw. d₂ zur Bewandung O, der Oberfläche des Sensorkopfes 3 angeordnet sein. Bei einer Temperaturänderung des Mediums 5 von einer ersten Temperatur T₁ zur einer zweiten Temperatur T₂ wird im in Fig. 2a gezeigten Fall, das Messelement 8 zu einem früheren Zeitpunkt die zweite Temperatur T₂ erreichen als der Temperatursensor 7.

Es sei darauf verwiesen, dass es sich bei Fig. 2a um ein Beispiel für eine konstruktionsbedingte Asymmetrie im Aufbau des jeweiligen Thermometers 1 handelt. Es versteht sich von selbst, dass auch andere asymmetrische Konstruktionen denkbar sind, für welche die im Kontext der vorliegenden Erfindung geschilderte Problematik ebenfalls zutrifft.

Ein weiterer Fall betrifft, wie in Fig. 2b dargestellt, den Einsatz der Vorrichtung in einem zumindest zweitweise und/oder teilweise dynamischen und/oder inhomogenen thermischen Umfeld. In diesem Falle betrifft dies eine Anwendung in einem strömenden Medium 5. Eine Temperaturänderung des Mediums 5 von einer ersten Temperatur T₁ zur einer zweiten Temperatur T₂ führt dazu, dass ein der Strömungsrichtung des Mediums 5 zugewandter Teilbereich 3a des Sensorkopfes 3 zu einem früheren Zeitpunkt die zweite Temperatur T₂ erreicht als ein der Strömungsrichtung des Mediums 5 abgewandter Teilbereich 3b des Sensorkopfes 3. Somit erreicht auch in diesem Falle das Messelement 8 zu einem früheren Zeitpunkt die zweite Temperatur T₂ als der Temperatursensor 7.

Diese beispielhaft illustrierte Problematik und die damit einhergehenden Fehler bei einer Messung bzw. die aus dieser Problematik resultierende Messungenauigkeit können mittels der vorliegenden Erfindung, insbesondere mittels der Einheit 11 umfassend zumindest teilweise ein Material mit anisotroper Wärmeleitfähigkeit, vermieden werden.

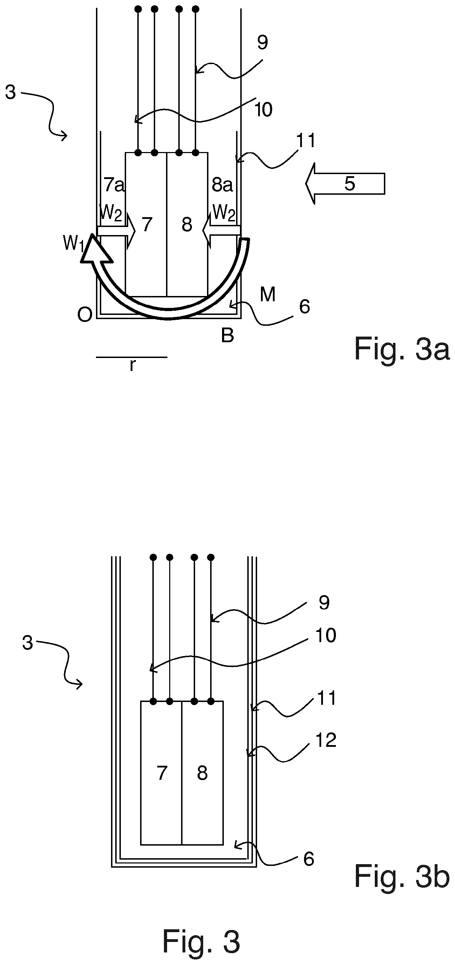

In Fig. 3 sind, ebenfalls beispielhaft, zwei bevorzugte Ausgestaltungen für eine erfindungsgemäße Vorrichtung 1 in schematischer Darstellung gezeigt. Bei den beiden in Fig. 3 gezeigten Beispielen handelt es sich bei der Einheit 11 um eine dünnwandige Folie aus Graphit. Es sei jedoch darauf verwiesen, dass auch andere Ausgestaltungen für die Einheit 11 möglich sind, welche gleichermaßen unter die vorliegende Erfindung fallen. Die Einheit 11 gewährleistet, dass zumindest der Temperatursensor 7 und das Messelement 8, welche in Fig. 3 in direktem Kontakt zueinander angeordnet sind, zu jedem Zeitpunkt im Wesentlichen im thermischen Gleichgewicht sind. Die temperatursensitiven Teilbereiche 7a,8a der Messelemente 7,8 sind dabei jeweils in gegensätzliche Richtungen ausgerichtet.

Die Einheit 11 ist im Bereich der äußeren Bewandung O, der Oberfläche des Sensorkopfes 3 angeordnet, welcher in dieser Ausrührung beispielhaft zylinderförmig ausgestaltet ist Somit umgibt die Einheit 11 entlang einer Bodenfläche B und entlang eines Teilbereiches der Mantelfläche M des Sensorkopfes 3 den Temperatursensor 7 und das Messelement 8 . Die Einheit 11 ist insbesondere symmetrisch um die beiden Messelemente 7,8 herum angeordnet. Eine symmetrische Anordnung ist jedoch nicht zwingend notwendig.

In der Ausgestaltung gemäß Fig. 3a ist die Einheit 11 im Inneren des Sensorkopfes 3 an dessen Bewandung O befestigt. Dies kann beispielsweise realisiert werden, indem aus einer ebenen Graphitfolie zum einen ein erstes Element, welches in seinen Dimensionen an die Bodenfläche B angepasst, also im vorliegenden Fall kreisförmig ist, sowie ein zweites Element, welches an die Dimension zumindest eines Teilbereichs der Mantelfläche angepasst und somit im vorliegenden Fall rechteckig ist (umfasst also O1 und 03), ausgestanzt wird. Das Wandstück kann in einem weiteren Arbeitsschritt beispielsweise entsprechend dem Radius r des Sensorkopfes 3 vorgeformt werden, beispielsweise mit Hilfe eines Rundstabs. Beide Elemente können dann in den Sensorkopf 3 eingesetzt werden.

Die Einheit 11 weist parallel zur Umfangsrichtung -entlang der Oberfläche O - des Sensorkopfes 3 eine, insbesondere deutlich, höhere Wärmeleitfähigkeit auf als senkrecht zur Umfangsrichtung. Bei einer Temperaturänderung des Mediums 5 von einer ersten Temperatur T₁ zur einer zweiten Temperatur T₂ erfolgt der Wärmeausbreitung zuerst entlang der Oberfläche O des Sensorkopfes (W1) und anschließend, insbesondere homogen, von der Oberfläche O ins Innere des Sensorkopfes 3 und zum Temperatursensor 7 und dem Messelement 8. Auf diese Weise befinden sich der Temperatursensor 7 und das Messelement 8 zu jedem Zeitpunkt im Wesentlichen im thermischen Gleichgewicht.

Das Innere des Sensorkopfes ist mit einem Füllstoff 6, welcher Füllstoff im Wesentlichen eine homogene thermische Leitfähigkeit und/oder thermische Kapazität aufweist, gefüllt. Die Einheit 11 ist dabei mittels eines Teils des Füllstoffes 6 im Inneren des Sensorkopfes 3 an dessen Bewandung O befestigt. Hierzu kann beispielsweise, nach Einsetzen der Einheit 11 in den Sensorkopf 3, eine erste Teilmenge Füllstoff in den Sensorkopf 3 eingefüllt werden, und mittels eines Formteils derart ausgerichtet werden, dass die Einheit 11 im Wesentlichen vollständig von einer dünnen Schicht Füllstoff 6 bedeckt wird. Im Anschluss können dann der Temperatursensor 7 und das Messelement 8 in den Sensorkopf 3 eingebracht werden, und das verbleibende Innenvolumen des Sensorkopfes 3 ebenfalls mit dem Füllstoff 6 gefüllt werden.

Eine zweite Ausgestaltung einer erfindungsgemäßen Vorrichtung ist in Fig. 3b gezeigt. Diese Ausgestaltung unterscheidet sich von derjenigen gemäß Fig. 3a nur in der Art und Weise der Befestigung der Einheit 11 innerhalb des Sensorkopfes 3. Auf bereits in Zusammenhang mit Fig. 3a erläuterte Elemente wird deshalb an dieser Stelle nicht erneut eingegangen. Für die Ausgestaltung in Fig. 3b ist die Einheit 11 mittels eines Befestigungselements 12 innerhalb des Sensorkopfes befestigt. Das Befestigungselement 12 ist bevorzugt in seinen Dimensionen an die Geometrie des Sensorkopfes 3 angepasst und wird. Zuerst wird die Einheit 11, beispielsweise entsprechend der in Zusammenhang mit Fig. 3a beschriebenen Variante, in den Sensorkopf 3 eingebracht. Direkt im Anschluss wird die Befestigungseinheit 3, hier in Form eines rohrförmigen Elements, in den Sensorkopf 3 eingeschoben, derart dass das Befestigungselement 12 im Wesentlichen vollständig mit der Einheit 11 in Kontakt ist.

### Bezugszeichenliste

- 1: Thermometereinsatz
- 2: Schutzrohr
- 3: Sensorkopf
- 4: Elektronikeinheit
- 5: Medium
- 6: Füllstoff
- 7: Temperatursensor
- 8: Messelement
- 9: Anschlussdrähte des Temperatursensors
- 10: Anschlussdrähte des Messelements
- 11: Einheit
- 12: Befestigungseinheit

- O: Bewandung des Sensorkopfes
- d₁,d₂: Abstand zum Temperatursensor bzw. Messelement
- W, W₁, W₂: Wärmeausbreitung
- M: Mantelfläche
- B: Bodenfläche
- r: Radius
- T₁, T₂: erste, zweite Temperatur

## Patentansprüche

1. Vorrichtung (1) zur Bestimmung und/oder Überwachung der Temperatur (T) eines Mediums (5) umfassend zumindest
einen Temperatursensor (7) und ein Messelement (8), wobei zumindest der Temperatursensor (7) und das Messelement (8) in einem einzigen Sensorkopf (3) angeordnet sind,
und wobei zumindest teilweise innerhalb des Sensorkopfes (3) zumindest eine Einheit (11) umfassend ein Material mit anisotroper Wärmeleitfähigkeit angeordnet ist,
wobei die Einheit (11) dazu ausgestaltet ist, den Wärmestrom innerhalb des Sensorkopfes gezielt zu beeinflussen, **dadurch gekennzeichnet**, das die Einheit dazu ausgestaltet ist, zu gewährleisten, dass zumindest der Temperatursensor (7) und das Messelement (8) zu jedem Zeitpunkt im Wesentlichen im thermischen Gleichgewicht sind, und dass unabhängig vom thermischen Umfeld der Vorrichtung, eine homogene Wärmeausbreitung innerhalb des Sensorkopfes stattfindet.

2. Vorrichtung (1) nach Anspruch 1,
wobei es sich bei dem Messelement (8) um einen zweiten Temperatursensor handelt.

3. Vorrichtung (1) nach Anspruch 1,
wobei es sich bei dem Messelement (8) um ein Referenzelement zur in situ Kalibrierung und/oder Validierung zumindest des Temperatursensors handelt, wobei das Referenzelement zumindest teilweise aus zumindest einem Material besteht, für welches Material im zur Kalibrierung des ersten Temperatursensors relevanten Temperaturbereich zumindest ein Phasenübergang zumindest zweiter Ordnung bei zumindest einer vorgegebenen Phasenübergangstemperatur auftritt, bei welchem Phasenübergang das Material in der festen Phase verbleibt.

4. Vorrichtung (1) nach Anspruch 3,
wobei es sich bei dem Material, um ein ferroelektrisches Material, um ein ferromagnetisches Material, oder um einen Supraleiter, insbesondere um einen Hochtemperatursupraleiter, handelt.

5. Vorrichtung (1) nach zumindest einem der vorhergehenden Ansprüche,
wobei die Einheit (11) eine Schicht oder eine Beschichtung umfasst, welche Schicht oder Beschichtung zumindest teilweise aus dem Material mit anisotroper Wärmeleitfähigkeit besteht, oder
wobei die Einheit (11) eine dünnwandige Folie umfasst, welche Folie zumindest teilweise aus dem Material mit anisotroper Wärmeleitfähigkeit besteht.

6. Vorrichtung (1) nach zumindest einem der vorhergehenden Ansprüche,
wobei ein Füllstoff (6) vorgesehen ist, welcher zumindest teilweise innerhalb des Sensorkopfes (3) angeordnet ist, und einen Innenraum des Sensorkopfes (1) zumindest teilweise, vorzugsweise vollständig, ausfüllt.

7. Vorrichtung (1) nach Anspruch 6,
wobei der Füllstoff (6) eine im Wesentlichen homogene thermische Leitfähigkeit und/oder thermische Kapazität aufweist.

8. Vorrichtung (1) nach zumindest einem der vorhergehenden Ansprüche,
wobei es sich bei dem Material mit anisotroper Wärmeleitfähigkeit um ein zumindest teilweise Kohlenstoff enthaltendes Material, insbesondere Graphit, oder um hexagonales Bornitrid handelt.

9. Vorrichtung (1) nach zumindest einem der vorhergehenden Ansprüche,
wobei die Einheit (11) derart ausgestaltet und/oder angeordnet ist, dass sie parallel zur Umfangsrichtung des Sensorkopfes (3) entlang einer Oberfläche (0) des Sensorkopfes (3) eine höhere, insbesondere zumindest 10fach größere, insbesondere zumindest 30fach höhere, Wärmeleitfähigkeit aufweist als senkrecht zur Umfangsrichtung von der Oberfläche (0) ins Innere des Sensorkopfes (3) und zum Temperatursensor (7) und dem Messelement (8).

10. Vorrichtung (1) nach zumindest einem der vorhergehenden Ansprüche,
wobei die Einheit (11) derart ausgestaltet und/oder angeordnet ist, dass sie den Temperatursensor (7) und das Messelement (8) zumindest teilweise umgibt.

11. Vorrichtung (1) nach zumindest einem der vorhergehenden Ansprüche,
wobei die Einheit (11) zumindest teilweise an einem dem Inneren des Sensorkopfes (3) zugewandten Teilbereich (B, M) einer Bewandung (0) des Sensorkopfes (3) befestigt ist.

12. Vorrichtung (1) nach Anspruch 11,
wobei die Einheit (11) mittels zumindest eines Teils des Füllstoffes (6), und/oder mittels eines Befestigungselements (12), beispielsweise in Form eines rohrförmigen Elements, an der Bewandung (O) des Sensorkopfes (3) befestigt ist.

13. Verfahren zur Herstellung einer Vorrichtung (1) nach zumindest einem der vorhergehenden Ansprüche,
wobei zumindest ein Temperatursensor (7) und ein Messelement (8) in einem einzigen Sensorkopf (3) angeordnet werden, und wobei zumindest teilweise innerhalb des Sensorkopfes (3) zumindest eine Einheit (11) umfassend zumindest teilweise ein Material mit anisotroper Wärmeleitfähigkeit angeordnet wird,
wobei die Einheit (3) dazu ausgestaltet ist, den Wärmestrom innerhalb des Sensorkopfes gezielt zu **dadurch gekennzeichnet, dass** die Einheit dazu ausgestaltet ist, zu gewährleisten, dass zumindest der Temperatursensor (7) und das Messelement (8) zu jedem Zeitpunkt im Wesentlichen im thermischen Gleichgewicht sind, und dass unabhängig vom thermischen Umfeld der Vorrichtung, eine homogene Wärmeausbreitung innerhalb des Sensorkopfes stattfindet.

14. Verfahren nach Anspruch 13,
wobei die Einheit (11) zumindest teilweise an einem dem Inneren des Sensorkopfes (3) zugewandten Teilbereich (B, M) einer Bewandung (0) des Sensorkopfes (3) befestigt wird.

15. Verfahren nach Anspruch 14,
wobei die Einheit (11) mittels zumindest eines Teils des Füllstoffes (6), und/oder mittels eines Befestigungselements (12), beispielsweise in Form eines rohrförmigen Elements, an der Bewandung (0) des Sensorkopfes (3) befestigt wird.

## Claims

1. Apparatus (1) designed to determine and/or monitor the temperature (T) of a medium (5), comprising at least a temperature sensor (7) and a measuring element (8),
wherein at least the temperature sensor (7) and the measuring element (8) are arranged in a single sensor head (3),
and wherein at least a unit (11) is arranged at least partially inside the sensor head (3), said unit comprising a material with anisotropic thermal conductivity, wherein the unit (11) is designed to specifically influence the heat flow within the sensor head,
**characterized in that**
the unit is designed to guarantee that at least the temperature sensor (7) and the measuring element (8) are essentially in thermal equilibrium at all times, and that the spread of heat within the sensor head is homogeneous irrespective of the thermal environment of the apparatus.

2. Apparatus (1) as claimed in Claim 1,
wherein the measuring element (8) is a second temperature sensor.

3. Apparatus (1) as claimed in Claim 1,
wherein the measuring element (8) is a reference element for in situ calibration and/or validation at least of the temperature sensor, wherein the reference element is at least partially made from at least one material, wherein at least one phase transition at least of the second order occurs at least at a predefined phase transition temperature for said material in the temperature range that is relevant for the calibration of the first temperature sensor, wherein the material remains in the solid state in said phase transition.

4. Apparatus (1) as claimed in Claim 3,
wherein the material is a ferroelectric material, a ferromagnetic material or a superconductor, particularly a high-temperature superconductor.

5. Apparatus (1) as claimed in at least one of the previous claims,
wherein the unit (11) comprises a layer or a coating, said layer or coating at least partially consisting of the material with anisotropic thermal conductivity, or wherein the unit (11) comprises a thin-walled film, said film at least partially consisting of the material with anisotropic thermal conductivity.

6. Apparatus (1) as claimed in at least one of the previous claims,
wherein a filler (6) is provided which is at least partially arranged inside the sensor head (3) and which fills an interior space of the sensor head (3) at least partially, preferably completely.

7. Apparatus (1) as claimed in Claim 6,
wherein the filler (6) has an essentially homogeneous thermal conductivity and/or thermal capacity.

8. Apparatus (1) as claimed in at least one of the previous claims,
wherein the material with an anisotropic thermal conductivity is a material at least partially containing carbon, particularly graphite, or a hexagonal boron nitride.

9. Apparatus (1) as claimed in at least one of the previous claims,
wherein the unit (11) is designed and/or arranged in such a way that along a surface (0) of the sensor head (3), parallel to the circumferential direction of the sensor head (3), it has a higher thermal conductivity, particularly at least 10 times higher, particularly at least 30 times higher, than perpendicular to the circumferential direction from the surface (0) towards the inside of the sensor head (3) and towards the temperature sensor (7) and the measuring element (8).

10. Apparatus (1) as claimed in at least one of the previous claims,
wherein the unit (11) is designed and/or arranged in such a way that it at least partially surrounds the temperature sensor (7) and the measuring element (8).

11. Apparatus (1) as claimed in at least one of the previous claims,
wherein the unit (11) is at least partially fixed on a partial area (B, M) of a wall (0) of the sensor head (3) facing towards the inside of the sensor head (3).

12. Apparatus (1) as claimed in Claim 11,
wherein the unit (11) is fixed on the wall (0) of the sensor head (3) by at least a part of the filler (6), and/or by means of a fastening element (12), for example in the form of a tubular element.

13. Procedure designed to manufacture an apparatus (1) as claimed in at least one of the previous claims,
wherein at least a temperature sensor (7) and a measuring element (8) are arranged in a single sensor head (3),
and wherein at least one unit (11) at least partially comprising a material with an anisotropic thermal conductivity is arranged at least partially within the sensor head (3),
wherein the unit (3) is designed to specifically influence the flow of heat within the sensor head,
**characterized in that**
the unit is designed to ensure that at least the temperature sensor (7) and the measuring element (8) are essentially in thermal equilibrium at any time, and that a homogeneous heat distribution takes place within the sensor head irrespective of the thermal environment of the unit.

14. Procedure as claimed in Claim 13,
wherein the unit (11) is fixed at least partially on a partial area (B, M) of a wall (0) of the sensor head (3) facing towards the interior of the sensor head (3).

15. Procedure as claimed in Claim 14,
wherein the unit (11) is fixed to the wall (0) of the sensor head (3) by means of at least a part of the filler (6), and/or by means of the fastening unit (12), for example in the form of a tubular element.

## Revendications

1. Dispositif (1) destiné à la détermination et/ou à la surveillance de la température (T) d'un produit (5), lequel dispositif comprend au moins un capteur de température (7) et un élément de mesure (8),
au moins le capteur de température (7) et l'élément de mesure (8) étant disposés dans une unique tête de capteur (3),
et au moins une unité (11) étant disposée au moins partiellement à l'intérieur de la tête de capteur (3), laquelle unité comprend un matériau à conductivité thermique anisotrope,
l'unité (11) étant conçue pour influencer de manière ciblée le flux de chaleur à l'intérieur de la tête de capteur,
**caractérisé**
**en ce que** l'unité est conçue pour garantir qu'au moins le capteur de température (7) et l'élément de mesure (8) sont pour l'essentiel en équilibre thermique à tout moment, et qu'une propagation homogène de la chaleur a lieu dans la tête de capteur indépendamment de l'environnement thermique du dispositif.

2. Dispositif (1) selon la revendication 1,
pour lequel l'élément de mesure (8) est un deuxième capteur de température.

3. Dispositif (1) selon la revendication 1,
pour lequel l'élément de mesure (8) est un élément de référence pour l'étalonnage et/ou la validation in situ au moins du capteur de température, l'élément de référence étant constitué au moins partiellement d'au moins un matériau, pour lequel matériau au moins une transition de phase au minimum de second ordre se produit à au moins une température de transition de phase prédéfinie dans la gamme de température pertinente pour l'étalonnage du premier capteur de température, transition de phase à laquelle le matériau reste en phase solide.

4. Dispositif (1) selon la revendication 3,
pour lequel le matériau est un matériau ferroélectrique, un matériau ferromagnétique ou un supraconducteur, notamment un supraconducteur à haute température.

5. Dispositif (1) selon au moins l'une des revendications précédentes,
pour lequel l'unité (11) comprend une couche ou un revêtement, laquelle couche ou revêtement est constitué(e) au moins partiellement du matériau à conductivité thermique anisotrope, ou
pour lequel l'unité (11) comprend une feuille à paroi mince, laquelle feuille est constituée au moins partiellement du matériau à conductivité thermique anisotrope.

6. Dispositif (1) selon au moins l'une des revendications précédentes,
pour lequel il est prévu une masse de remplissage (6) qui est disposée au moins partiellement à l'intérieur de la tête de capteur (3) et qui remplit un espace intérieur de la tête de capteur (3) au moins partiellement, de préférence complètement.

7. Dispositif (1) selon la revendication 6,
pour lequel la masse de remplissage (6) présente une conductivité thermique et/ou une capacité thermique sensiblement homogènes.

8. Dispositif (1) selon au moins l'une des revendications précédentes,
pour lequel le matériau à conductivité thermique anisotrope est un matériau comprenant au moins partiellement du carbone, notamment du graphite, ou du nitrure de bore hexagonal.

9. Dispositif (1) selon au moins l'une des revendications précédentes,
pour lequel l'unité (11) est conçue et/ou disposée de telle sorte qu'elle présente, parallèlement à la direction circonférentielle de la tête de capteur (3) le long d'une surface (0) de la tête de capteur (3), une conductivité thermique plus élevée, notamment au moins 10 fois plus élevée, notamment au moins 30 fois plus élevée que perpendiculairement à la direction circonférentielle de la surface (0) vers l'intérieur de la tête de capteur (3) et vers le capteur de température (7) et l'élément de mesure (8).

10. Dispositif (1) selon au moins l'une des revendications précédentes,
pour lequel l'unité (11) est conçue et/ou disposée de telle sorte qu'elle entoure au moins partiellement le capteur de température (7) et l'élément de mesure (8).

11. Dispositif (1) selon au moins l'une des revendications précédentes,
pour lequel l'unité (11) est au moins partiellement fixée sur une zone partielle (B M) d'une paroi (0) de la tête de capteur (3) tournée vers l'intérieur de la tête de capteur (3).

12. Dispositif (1) selon la revendication 11,
pour lequel l'unité (11) est fixée à la paroi (0) de la tête de capteur (3) au moyen d'au moins une partie de la masse de remplissage (6), et/ou au moyen d'un élément de fixation (12), par exemple sous la forme d'un élément tubulaire.

13. Procédé destiné à la fabrication d'un dispositif selon au moins l'une des revendications précédentes,
pour lequel au moins un capteur de température (7) et un élément de mesure (8) sont disposés dans une unique tête de capteur (3),
et pour lequel au moins une unité (11) comprenant au moins en partie un matériau ayant une conductivité thermique anisotrope est disposée partiellement à l'intérieur de la tête de capteur (3),
pour lequel l'unité (3) est conçue pour influencer de manière ciblée le flux de chaleur à l'intérieur de la tête de capteur,
**caractérisé**
**en ce que** l'unité est conçue de telle sorte qu'au moins le capteur de température (7) et l'élément de mesure (8) sont à tout moment pour l'essentiel en équilibre thermique, et
**en ce que**, indépendamment de l'environnement thermique du dispositif, une propagation homogène de la chaleur a lieu à l'intérieur de la tête de capteur.

14. Procédé selon la revendication 13,
pour lequel l'unité (11) est au moins partiellement fixée à une zone partielle (B, M) d'une paroi (0) de la tête de capteur (3) faisant face à l'intérieur de la tête de capteur (3).

15. Procédé selon la revendication 14,
pour lequel l'unité (11) est fixée à la paroi (0) de la tête de capteur (3) au moyen d'au moins une partie de la masse de remplissage (6), et/ou au moyen d'un élément de fixation (12), par exemple sous la forme d'un élément tubulaire.
